# EUROPEAN PATENT APPLICATION

(11) **EP 2 533 584 A1**
(43) Date of publication of application: **12.12.2012**
(21) Application number: 10845278.0
(22) Date of filing: 22.12.2010
(51) Int. Cl.: H04W 56/00, H04W 16/14, H04W 16/24

(54) **WIRELESS COMMUNICATION SYSTEM, RADIO BASE STATION AND COOPERATIVE CONTROL METHOD**

(30) Priority: 04.02.2010 JP 2010023120
(71) Applicant: NEC Corporation, Tokyo 108-8001 (JP)
(72) Inventor: TAKAGI, Kenki, Tokyo 108-8001 (JP)
(74) Representative: Glawe, Delfs, Moll
(86) International application number: PCT/JP2010/073152
(87) International publication number: WO 2011/096147

(57) **Abstract**

A wireless communication system comprises: a plurality of first radio base stations that each includes data in frames and uses a frequency in a predetermined frequency band to transmit the frames to a first terminal that is present in its own cover are; and a second radio base station that has as its own cover area the same areas as the cover areas of the plurality of first radio base stations and that includes data in frames and uses a frequency in the predetermined frequency band to transmit the frames to a second terminal that is present in its own cover area. Each of the first radio base stations reports to the second radio base station the transmission timing of frames to the first terminal, and the second radio base station synchronizes the transmission timing of transmitting frames to the second terminal with the reported transmission timing,

## Description

### TECHNICAL FIELD

The present invention relates to a wireless communication system, a radio base station, and a cooperative control method.

### BACKGROOUND ART

The subscription rate to a mobile telephone service has reached more than 90% of the total population in advanced nations, and is approaching 120% in some advanced nations. As a result, the popularization of mobile telephone service among users is at the saturation point. However, in order to increase sales among mobile telephone operators in recent years, wireless communication systems that perform communication without the intermediation of users between terminals such as vending machines, onboard terminals (car navigation terminals), and signals (for example, refer to Patent Literature 1 (JP H8-198415A)) are being investigated.

In the following explanation, terminals such as mobile telephones that communicate via users arc referred to as user terminals, and terminals that communicate without the intermediation of users are referred to as machine terminals. In addiction, communication performed between machine terminals is referred to as Machine-to-Machine (M2M) communication in order to distinguish it from voice communication or communication such as Web browsing that employs user terminals.

In voice communication or Web browsing, delays or cuts in communication can be physically sensed by users and result in annoyance, Thus, high communication quality in which delays and cuts in communication do not occur is required in communication that employs user terminals.

In M2M communication, on the other hand, the transmission and reception or data (such as uploading and downloading) are therefore chiefly carried out periodically (once a day or once every few hours), and it is sufficient only that the transmission and reception of data are ultimately achieved. The occurrence of a certain level of delays and cuts in communication is therefore permissible and the demand for communication quality is reduced.

As a result, if traffic due to M2M communication should increase in the future, the expanded installation of networks to process this traffic that have communication quality equivalent to networks for communication with user terminals will require an excessive investment in plants and equipment.

### RELATED ART LITERATURE

### Patent LITERATURE

Patent Literature 1: JP H08-198415A

### DISCLOSURE OF THE INVENTION

As one solution for a network configuration that deals with an increase of traffic due to M2M communication, a configuration is considered in which a radio base station is provided that has as its cover area an area that straddles the cover area of a plurality of radio base stations. In the following explanation, each of the plurality of radio base stations is referred to as a normal radio base station and the radio base station that has as its cover area the same area as the cover area of the plurality of normal radio base stations is referred to as a centralized-control radio base station.

A network that is provided with normal radio base stations and a centralized-control radio base station has the following two characteristics:

The first characteristic is that the same frequency band is assigned to the normal radio base stations and the centralized-control radio base station and that data are transmitted in this frequency band.

The second characteristic is that a normal radio base station communicates with user terminals and a centralized-control radio base station communicates with machine terminals.

However, the following problems are encountered in realizing the above-described characteristics.

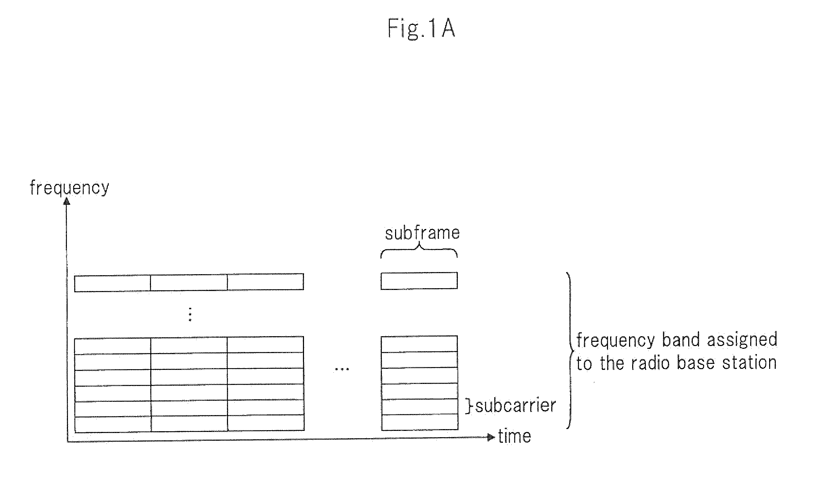

FIG. 1A shows an example of the configuration of a frame by which a radio base station transmits data in an LTE (Long Term Evolution) system.

As shown in FIG. 1A, in an LTE system, a radio base station includes data in subframes and then uses a frequency in the frequency band that is assigned to its own base station to transmit these subframes in subcarrier units.

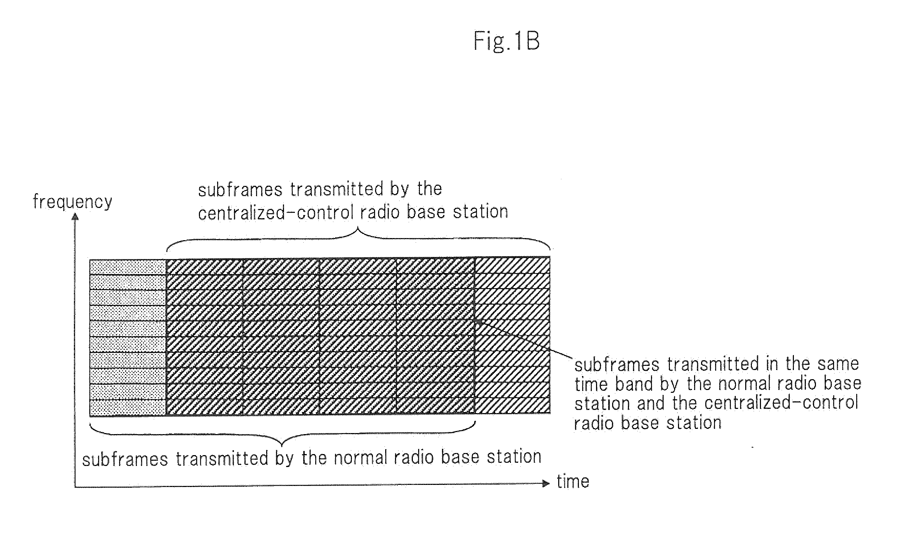

Here, as shown in FIG. 1B, when the normal radio base stations and centralized-control radio base station use the same subcarriers to transmit subframes in the same time band, the interfere of the transmission waves with each other prevents transmission of the data.

Dividing the subframes that are transmitted by a normal radio base station and a centralized-control radio base station can be considered as a means of preventing the occurrence of interference. However, when the subframes that are transmitted by a normal radio base station and the subframes that are transmitted by the centralized-control radio base station are continuous, a shift in the transmission timing of the subframes of the normal radio base station and the centralized-control radio base station results in the overlapped transmission of subframes in the same time band, whereupon interference occurs and data cannot be transmitted. Therefore, the transmission timings for transmitting subframes must be synchronized between a normal radio base station and the centralized-control radio base station. However, a problem arises in which the method of synchronizing the transmission timings between the normal radio base station and the centralized-control radio base station has not been sufficiently studied.

It is therefore an object of the present invention to provide a wireless communication system, a radio base station, and a cooperative control method that can solve the above-described problems.

### SUMMARY OF THE INVENTION

In order to achieve the above described object, a wireless communication system according to the present invention comprises:
a plurality of first radio base stations that each includes data in frames and uses frequencies in a predetermined frequency band to transmit the frames to a first terminal that is present in the cover area of its own base station; and
a second radio base station that has as its cover area the same area as the cover areas of the plurality of first radio base stations and that includes data in frames and uses frequencies in the predetermined frequency band to transmit the frames to a second terminal present in the cover area of its own base station;
wherein each of the plurality of first radio base stations reports to the second radio base station the transmission timing at which the first radio base station transmits the frames to the first terminal; and
the second radio base station synchronizes the transmission timing of frames that are transmitted to the second terminal with the transmission timing that was reported from the first radio base station that covers the cover area in which the second terminal is present.

In order to achieve the above described object, a radio base station according to the present invention is a radio base station that includes data in frames and uses frequencies in a predetermined frequency band to transmit the frames to a first terminal that is present in the cover area of its own base station, and comprises:
a control unit that reports transmission timing at which the radio base station transmits the frames to the first terminals to a centralized-control radio base station that has as its cover area the same area as the cover area of the radio base station and that uses frequencies in the predetermined frequency band to transmit frames included in data to a second terminals that is present in the cover area of its own base station.

In order to achieve the above described object, a cooperative control method according to the present invention is a method by which a first radio base station cooperates with a second radio base station when the first radio base station and the second radio base station have the same area as cover area and use frequencies in the same frequency band to transmit frames included in data to a first terminal and a second terminal, respectively, the cooperative control method comprising steps of:
reporting the transmission timing at which the first radio base station transmits the frames to the first terminal from the first radio base station to the second radio base station.

### EFFECT OF THE INVENTION

According to the present invention, a first radio base station reports to a second radio base station, that has as its cover area the same area as the first radio base station, the transmission timing at which the first radio base station transmits frames to a first terminal that is present in the cover area of the first radio base station, and the second radio base station synchronizes the transmission timing or frames that are transmitted to a second terminal with the transmission timing or frames that was reported from the first radio base station that covers the cover area in which the second terminal is present.

Thus, reporting the transmission timing of frames of a first radio base station to a second radio base station enables the synchronization of the transmission timings of frames between the two radio base stations.

### BRIEF DESCRIPTION OF THE DRAWINGS

FIG. 1A is a diagram showing the configuration of a typical frame.
FIG. 1B is a diagram for describing problems when normal radio base station and centralized-control radio base station are provided.
FIG. 2 is a diagram showing the configuration of the wireless communication system of the first exemplary embodiment of the present invention.
FIG. 3A is a block diagram showing the configuration of the normal radio base station shown in FIG. 2.
FIG. 3B is a block diagram showing the configuration of the centralized-control radio base station shown in FIG. 2.
FIG. 3C is a block diagram showing the configuration of the RF transceiver shown in FIG. 2.
FIG. 4 is a diagram for describing the operation of the wireless communication system shown in FIG. 2.
FIG. 5 is a diagram showing an example of the assignment of subframes to a centralized-control radio base station.
FIG. 6 is a sequence diagram showing an example of the operations of a wireless communication system at the time of activating the centralized-control radio base station shown in FIG. 4.
FIG. 7 is a sequence diagram showing an example of the operations of the wireless communication system at the time of activating the normal radio base station shown in FIG. 4.
FIG. 8 is a sequence diagram showing an example of the operations of the wireless communication system at the time of activating the normal radio base station shown in FIG. 4.
FIG. 9 is a sequence diagram showing an example, of the operations of the wireless communication system at the time of activating the centralized-control radio base station shown in FIG. 4.
FIG. 10 is a sequence diagram showing an example of the operations of the wireless communication system at the time of activating the normal radio base station shown in FIG. 4.
FIG. 11 is a sequence diagram showing an example of the operations of the wireless communication system at the time of activating the normal radio base station shown in FIG. 4.
FIG. 12 is a diagram for describing the operations of the wireless communication system of the second exemplary embodiment of the present invention.
FIG. 13 is a sequence diagram showing an example of the operations of the wireless communication system at the time of activating the centralized-control radio base station shown in FIG. 12.
FIG. 14 is a sequence diagram showing an example of the operations of the wireless communication system at the time of activating the normal radio base station shown in FIG. 12.
FIG. 15 is a sequence diagram showing an example of the operations of the wireless communication system at the time of activating the normal radio base station shown in FIG. 12.
FIG. 16 is a sequence diagram showing an example of the operations of the wireless communication system at the time of activating the centralized-control radio base station shown in FIG. 12.
FIG. 17 is a sequence diagram showing an example of the operations of the wireless communication system at the time of activating the normal radio base station shown in FIG. 12.
FIG. 18 is a sequence diagram showing an example of the operations of the wireless communication system at the time of activating the normal radio base station shown in FIG. 12.
FIG. 19 is a view for describing the operations of the wireless communication system of the third exemplary embodiment of the present invention.
FIG. 20 is a sequence diagram showing an example of the operations of the wireless communication system at the time of activating the centralized-control radio base station shown in FIG. 19.
FIG. 21 is a sequence diagram showing an example of the operations of the wireless communication system at the time of activating the normal radio base station shown in FIG. 19.
FIG. 22 shows an example of the assignment of subcarriers to a centralized-control radio base station.

### EXEMPLARY EMBODIMENTS

Exemplary embodiments for carrying out the present invention are next described with reference to the accompanying drawings.

### First Exemplary Embodiment

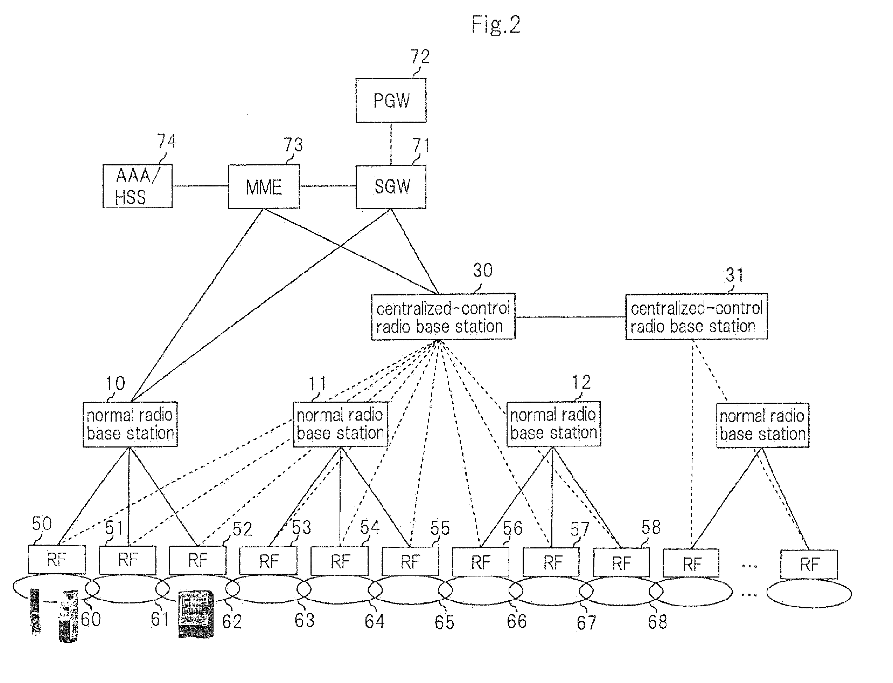

FIG. 2 shows the configuration of the wireless communication, system of the first exemplary embodiment of the present invention.

The wireless communication system shown in FIG. 2 includes: normal radio base stations 10-12, centralized-control radio base stations 3 0 and 31, RF transceivers 50-58, SGW (Serving Gate Way) 71, PGW (PDN Gate Way) 72, MME (Mobility Management Entity) 73, and AAA/HSS (Authentication, Authorization, Accounting/Home Subscriber Server) 74.

Normal radio base station 10 is connected to Transceivers 50-52, covers areas 60-62, and transmits and receives data with user terminals present in cover areas 60-62. More specifically, when normal radio base station 10 transmits data to a user terminal present in cover area 60, normal radio base station 10 generates data that are to be transmitted to the user terminal and supplies the data to RF transceiver 50 and transmits the data via RF transceiver 50. In addition, data that have been transmitted from a user terminals that is present in cover area 60 are received by RF transceiver 50 and supplied to normal radio base station 10. Compared to normal radio base station 10, normal radio base stations 11 and 12 differ only in the RF transceivers that they are connected to, and detailed explanation is therefore omitted hereinbelow.

Centralized-control radio base station 30 is connected to RF transceivers 50-58, covers areas 60-68, and transmits and receives data with machine terminals present in cover areas 60-68. Accordingly, centralized-control radio base station 30 is connected to the same RF transceivers 50-58 as normal radio base stations 10- 12, and has as cover areas the same areas as the cover areas of normal radio base stations 10-12. In addition, centralized-control radio base station 31 differs from centralized-control base station 30 only regarding the RF transceiver to which it is connected, and detailed explanation is therefore here omitted. Centralized-control radio base station 30 also transmits and receives data with machine terminals via RF transceivers with which it is connected, similar to normal radio base station 10.

Although not shown in the figures, centralized-control radio base station 30 is connected to centralized-control radio base station 31 and normal radio base station 10 through X2 interfaces. In addition, normal radio base station 10 and centralized-control radio base station 30 are connected to SGW 71 and MME 73 through an S1 interface.

RF transceiver 50 amplifies data that are transmitted and received between normal radio base station 10 and user terminals that are present in cover area 60 and between centralized-control radio base station 30 and machine terminals that are present in cover area 60. RF transceivers 51-58 have the same configuration and carry out the same operations as RF transceiver 50, and detailed explanation is therefore here omitted.

SGW 71, PGW 72, MME 73, and AAA/HSS 74 are each devices on the core network side that perform operations such as data transfer, connection to external networks of the terminals, management of the movement of terminals, authentication of terminals and information management. Detailed explanation of these components is omitted because these components are well known to those in the field and further, and because they are not directly related to the present invention.

The configurations of normal radio base station 10, centralized-control radio base station 30, and RF transceiver 50 are next described.

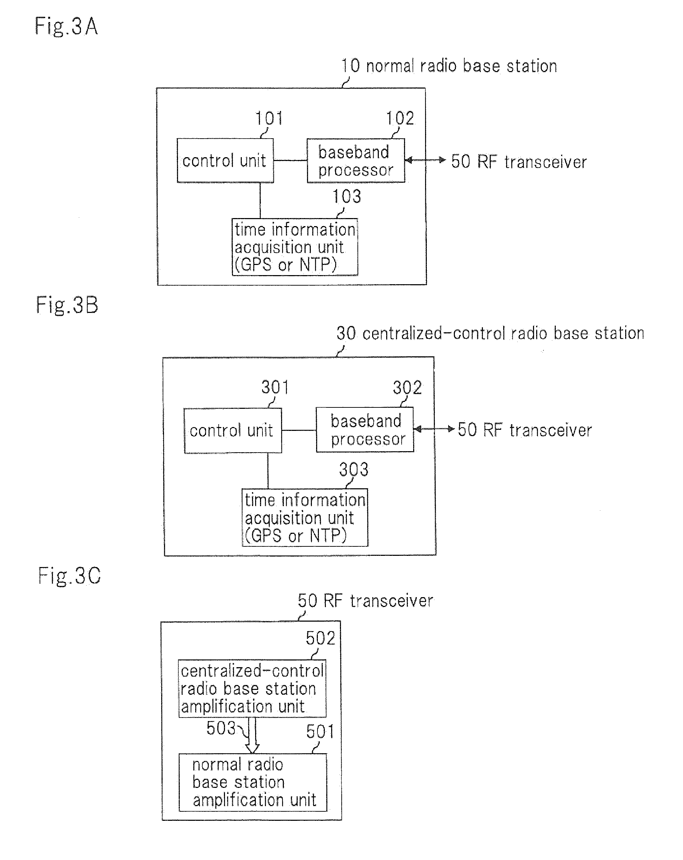

FIG. 3A is a block diagram showing the configuration of normal radio base station 10.

Normal radio base station 10 shown in FIG. 3A includes control unit 101, baseband processor 102, and time information acquisition unit 103.

Control uni 101 controls the overall operations of normal radio base station 10 and carries out, for example, call processing as well as maintenance and monitoring processes.

Baseband processor 102 carries out baseband processes such as decoding and encoding of data that are transmitted and received between normal radio base station 10 and RF transceiver 50.

Time information acquisition unit 103 acquires a reference time from a GPS (Global Positioning System) or an NTP (Network Time Protocol) server, acquires time information that indicates the transmission timing of its own station based on this reference time, and supplies this time information to control unit 10 1.

FIG. 3B is a block diagram showing the configuration of centralized-control radio base station 30.

Centralized-control radio base station 30 shown in FIG. include control unit 301, baseband processor 302, and time information acquisition unit 303.

Control unit 301 controls the overall operations of centralized-control radio base station 30, and for example, carries out call processing as well as maintenance and monitoring processes.

Baseband processor 302 carries out baseband processing of data that are transmitted and received between centralized-control radio base station 30 and RF transceiver 50.

Time information acquisition unit 303 acquires a reference time from a GPS or NTP server, acquires time information that indicates the transmission timing of its own station based on the reference time, and supplies this time information to control unit 301.

FIG. 3C is a block diagram showing the configuration of RF transceiver 50.

RF transceiver 50 shown in FIG. 3C includes normal radio base station amplification unit 501 and centralized-control radio base station amplification unit 502.

Normal radio base station amplification unit 501 amplifies data that are transmitted and received via an antenna (not shown) between normal radio base station 10 and user terminals.

Centralized-control radio base station amplification unit 502 amplifies the data that are transmitted and received via an antenna (not shown) between centralized-control radio base station 30 and machine terminals and, through monitor interface 503, monitors data that are transmitted via normal radio base station amplification unit 501.

The operations of the wireless communication, system of the present exemplary embodiment are next described.

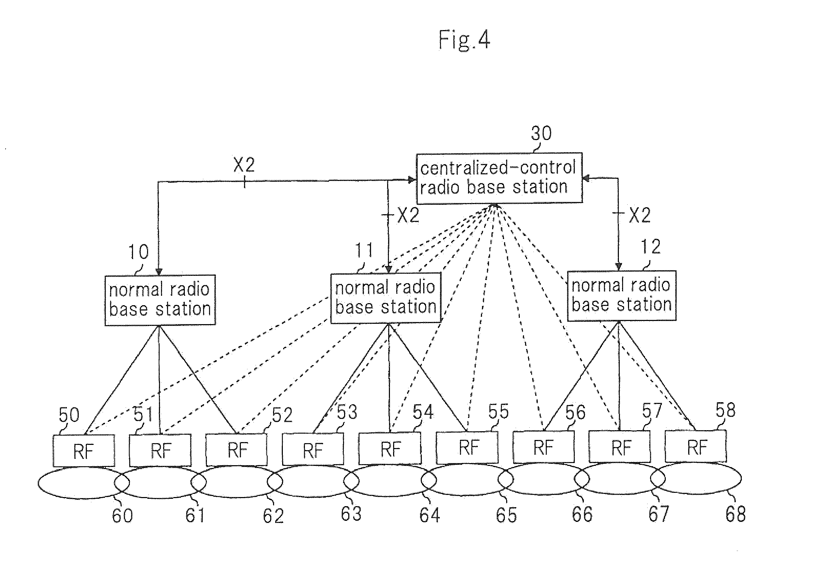

As shown in FIG. 4, in the present exemplary embodiment, explanation regards an example in which normal radio base stations 10-12 and centralized-control radio base station 30 directly report information via an X2 interface while focusing on the operations of normal radio base station 10 and centralized-control radio base station 30.

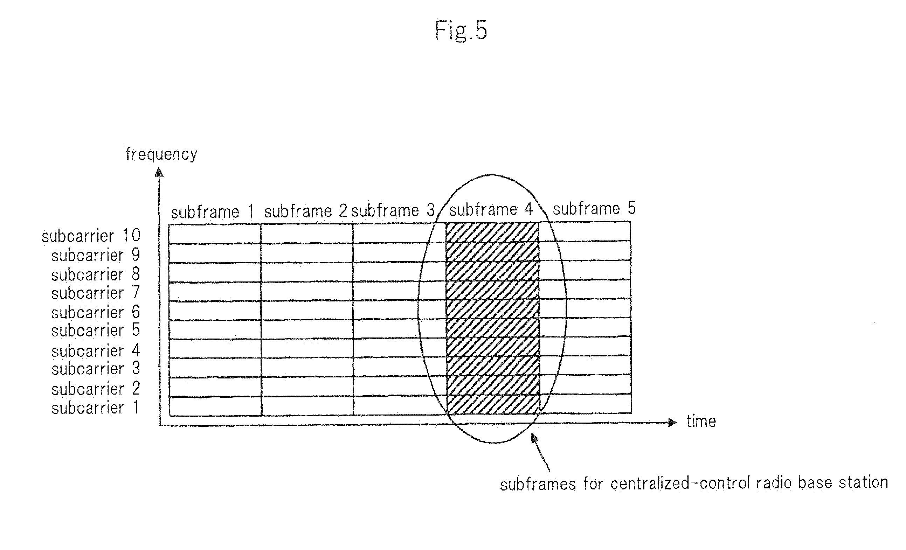

In the following explanation, as shown in FIG. 5, normal radio base station 10 determines assignment of subframes by which centralized-control radio base station 30 includes and transmits data, and includes and transmits data in subframes other than the assigned subframes, and centralized-control radio base station 30 includes and transmits data in the subframes that were assigned.

### (A) Operations for synchronizing transmission timing:

Explanation first regards the operations for synchronizing the transmission timings between normal radio base station 10 and centralized-control radio base station 30.

Each time normal radio base station 10 and centralized-control radio base station 3 0 are activated (or reactivated), the transmission timing must be synchronized between the two radio base stations, and the operations at the time of start-up of each of the radio base station is therefore described separately.

### (A-1) Operations at the time of activating centralized- control radio base station 30:

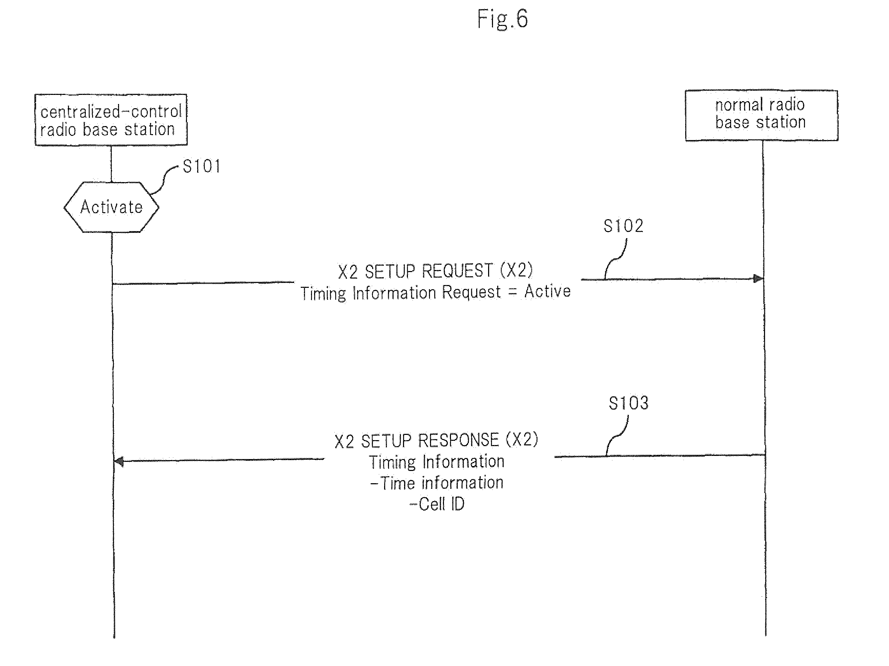

FIG. 6 is a sequence diagram showing the operations for synchronizing transmission timings at the time of activating centralized-control radio base station 30.

At the time of activating (Step S101), control unit 301 of centralized-control radio base station 30 transmits an X2 SETUP REQUEST message to normal radio base stations 10-12 (Step S102). A "Timing Information Request" IE is added to this X2 SETUP REQUEST message as a new information element, and control unit 301 sets this IE to "Active" to request time information indicating the transmission timing of frames to normal radio base stations 10-12.

Time information acquisition unit 103 of normal radio base station 10, upon receiving the X2 SETUP REQUEST message that was transmitted from centralized-control radio base station 30, refers to the "Timing Information Request" IE, and when this IE is "active," converts the transmission timing of its own station based on the reference time that was acquired from a GPS or NTP server to obtain timing information. Control unit 101 then transmits an X2 SETUP RESPONSE message, which is a response message, to centralized-control radio base station 30 (Step S103). A "Timing Information"" IE is added to this X2 SETUP RESPONSE message as a new information element, and control unit 101 sets the time information that was acquired by time information acquisition unit 103 and the Cell ID that is the identification information of its own station in this IE.

Control unit 301 of centralized-control radio base station 30, upon receiving the X2 SETUP RESPONSE message that was transmitted from normal radio base stations 10-12, synchronizes the transmission timing between each normal radio base station based on the Cell ID and time information that was set in the "Timing Information" IE.

### (A-2) Operations at the time of activating normal radio base station 10:

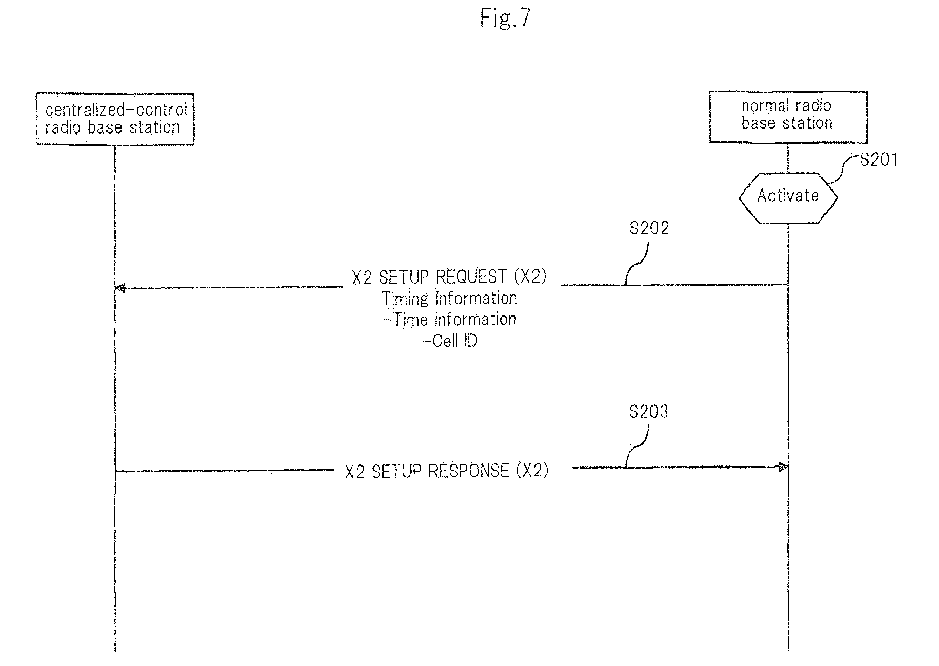

FIG. 7 is a sequence diagram showing the operations for synchronizing the transmission timing at the time of activating normal radio base station 10.

At the time of activating (Step S201), time information acquisition unit 103 of normal radio base station 10 acquires time information, and control unit 101 transmits an X2 SETUP REQUEST message to centralized-control radio base station 30 (Step S202). A "Timing Information" IE is added as a new information element to this X2 SETUP REQUEST message, and control unit 101 sets the time information that was acquired by time information acquisition unit 103 and the Cell ID in this IE.

Control unit 301 of centralized-control radio base station 30, upon receiving the X2 SETUP REQUEST message that was transmitted from normal radio base station 10, synchronizes the transmission timing with normal radio base station 10 based on the time information that was set in the "Timing Information" IE and transmits an X2 SETUP RESPONSE message to normal radio base station 10 (Step S203).

### (A-3) Other operations at the time of activating normal radio base station 10:

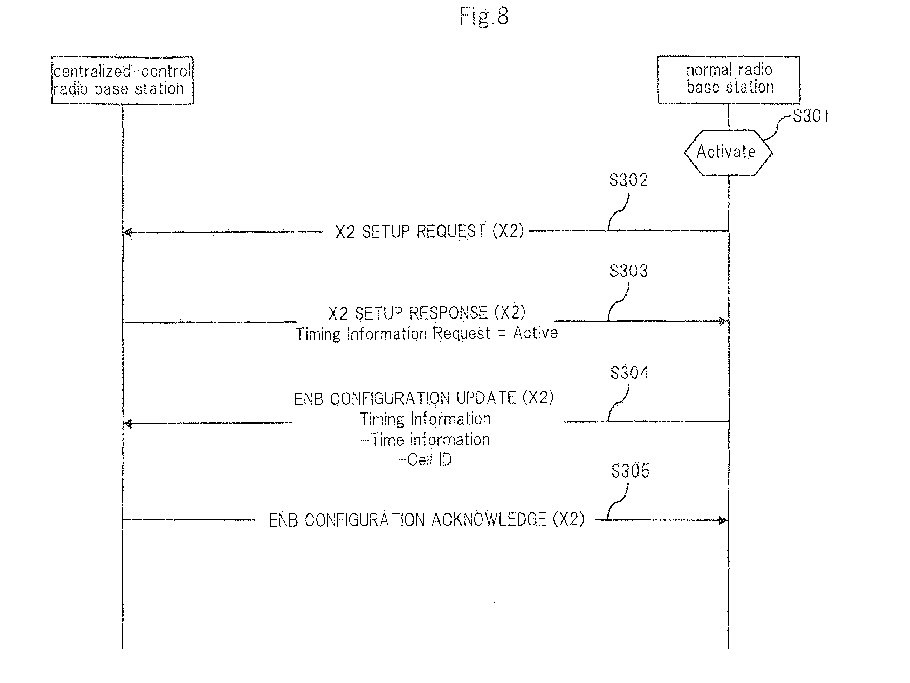

FIG. 8 is a sequence diagram showing other operations for synchronizing the transmission timing at the time of activating normal radio base station 10.

At the time of activating (Step S301), control unit 101 of normal radio base station 10 transmits an X2 SETUP REQUEST message to centralized-control radio base station 30 (Step S302), and control unit 301 of centralized-control radio base station 30, upon receiving the X2 SETUP REQUEST message, transmits an X2 SETUP RESPONSE message to normal radio base station 10 (Step S3 03). A "Timing Information Request" IE is added as a new information, element to this X2 SETUP RESPONSE message, and control unit 301 sets this IE to "active" to request time information.

Time information acquisition unit 103 of normal radio base station 10, upon receiving the X2 SETUP RESPONSE message that was transmitted from centralized-control radio base station 30, refers to the "Timing Information Request" IE, If this IE is "Active," time information acquisition unit 103 acquires time information, and control unit 101 transmits an ENB CONFIGURATION UPDATE message to centralized-control radio base station 30 (Step S304). A "Timing Information" IE is added as a new information element to this ENB CONFIGURATION UPDATE message, and control unit 101 sets the time information that was acquired by time information acquisition unit 103 and the Cell ID to this IE.

Upon receiving the ENB CONFIGURATION UPDATE message that was transmitted from normal radio base station Control unit 301 of centralized-control radio base station 30 synchronizes the transmission timing with normal radio base station 10 based on the time information that was set in the "Timing Information" IE and transmits an ENB CONFIGURATION ACKNOWLEDGE message to normal radio base station 10 (Step S305).

### (B) Subframe assignment operations:

The operations for assigning subframes to centralized-control radio base station 30 are next described.

The subframes that are assigned to centralized-control radio base station 30 must be reported to user terminals and machine terminals. The notification to user terminals and machine terminals is assumed to be carried out from only one radio base station of normal radio base station 10 and centralized-control radio base station 3 0, the radio base station that carries out notification being referred to as the "master base station." In the following explanation, normal radio base station 10 is assumed to be the master base station.

In addition, subframes must be assigned each time normal radio base station 10 and centralized-control radio base station 30 are activated (or reactivated), and the operations at the time of activating each of the radio base stations are therefore described separately.

### (B-1) Operations at the time of activating centralized-control radio base station 30:

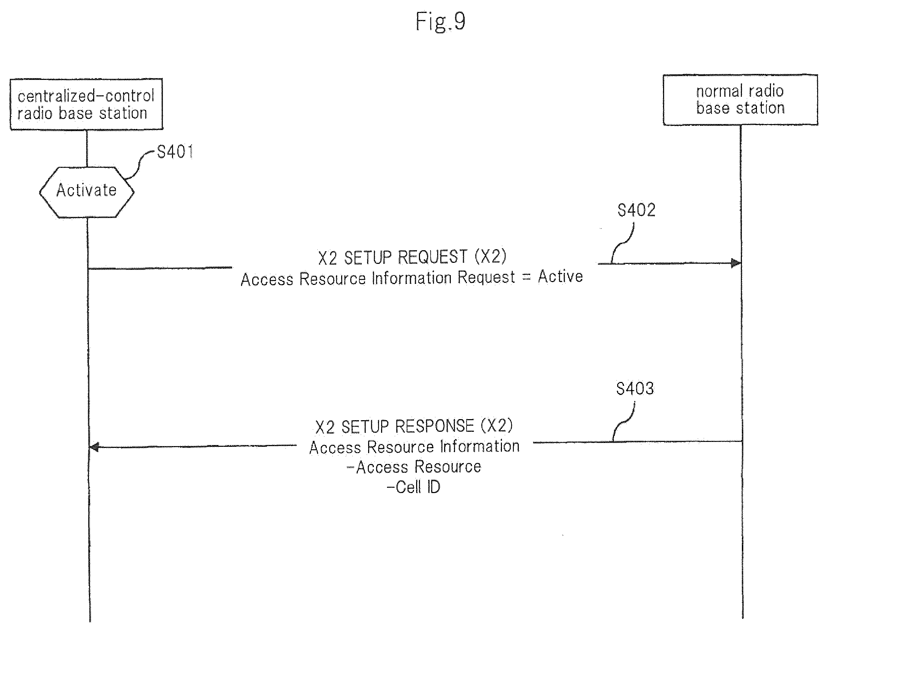

FIG. 9 is a sequence diagram showing the operations of assigning subframes at the time of activating centralized- control radio base station 30.

At the time of activating (Step S401), control unit 301 of centralized-control radio base station 30 transmits an X2 SETUP REQUEST message to normal radio base stations 10-12 (Step S402). An "Access Resource Information Request" IE is added as a new information element to this X2 SETUP REQUEST message and control unit 301 sets this IE to "Active" to request assignment of subframes.

Control unit 101 of normal radio base station 10, upon receiving the X2 SETUP REQUEST message that was transmitted from centralized-control radio base station 30, refers to the "Access Resource Information Request" IE, and when this IE is "active," determines the subframes that are to be assigned to centralized-control radio base station 30 and transmits an X2 SETUP RESPONSE message to centralized-control radio base station 30 (Step S403). An "Access Resource Information" IE is added as a new information element to this X2 SETUP RESPONSE message, and control unit 101 sets the Subframe numbers of the assigned subframes and Cell ID in this IE.

Control unit 101 of normal radio base station 10 transmits an RRC: System Information message that is notification information that includes the Subframe numbers to report the Subframe numbers of the assigned subframes to user terminals and machine terminals that are present in cover areas 60-62. More specifically, a "centralized-control radio base station SubframeConfig" IE is added as a new information element to a System Information Block Type 2 message, and normal radio base station 10 sets the Subframe numbers of the assigned subframes in this IE.

When control unit 301 of centralized-control radio base station 30 receives the X2 SETUP RESPONSE message that was transmitted from normal radio base stations 10-12 and when the Cell ID that is set in the "Access Resource Information" IE indicates, for example, normal radio base station 10, control unit 301 includes data in the subframes that were assigned from normal radio base station 10 and transmits the subframes to machine terminals that are present in cover areas 60-62.

In this case, the transmission timings are synchronized between normal radio base station 10 and centralized-control radio base station 30 as described hereinabove, and centralized-control radio base station 30 is able to find the timing of transmitting subframes that were assigned to it from these transmission timings, whereby the radio base stations that transmit data at the timings of the start and end of the assigned subframes can be switched and the occurrence of interference can be prevented.

### (B-2) Operations at the time of activating normal radio base station 10:

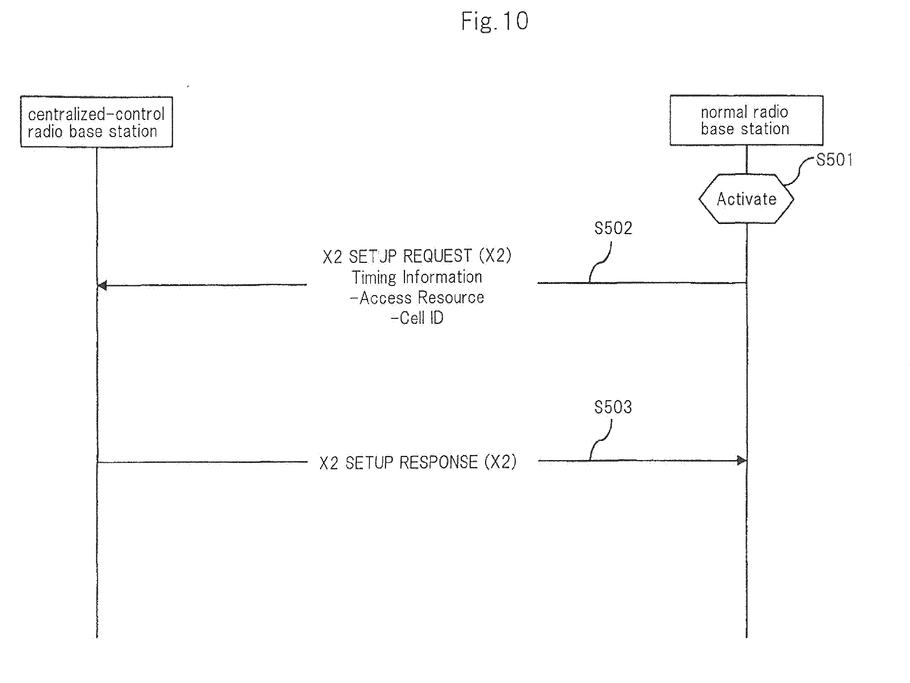

FIG. 10 is a sequence diagram showing the operations of assigning subframes at the time of activating normal radio base station 10.

At the time of activating (Step S501), control unit 101 of normal radio base station 10 determines the subframes that are to be assigned to centralized-control radio base station 30, and transmits an X2 SETUP REQUEST message to centralized-control radio base station 30 (Step S502.). An "Access Resource Information" IE is added as a new information element to this X2 SETUP REQUEST message, and control unit 101 sets the Cell ID and the Subframe numbers of the assigned subframes in this IE.

In addition, control unit 101 includes the Subframe numbers of the assigned subframes in an RRC: System Information message and transmits the message.

Upon receiving the X2 SETUP REQUEST message that was transmitted from normal radio base station 10, control unit 301 of centralized-control radio base station 30 transmits an X2 SETUP RESPONSE message to normal radio base station 10 (Step S503) and includes data in subframes that were assigned from normal radio base station 10 and transmits to machine terminals present in cover areas 60-62.

### (B-3) Other operations at the time of activating of normal radio base station 10:

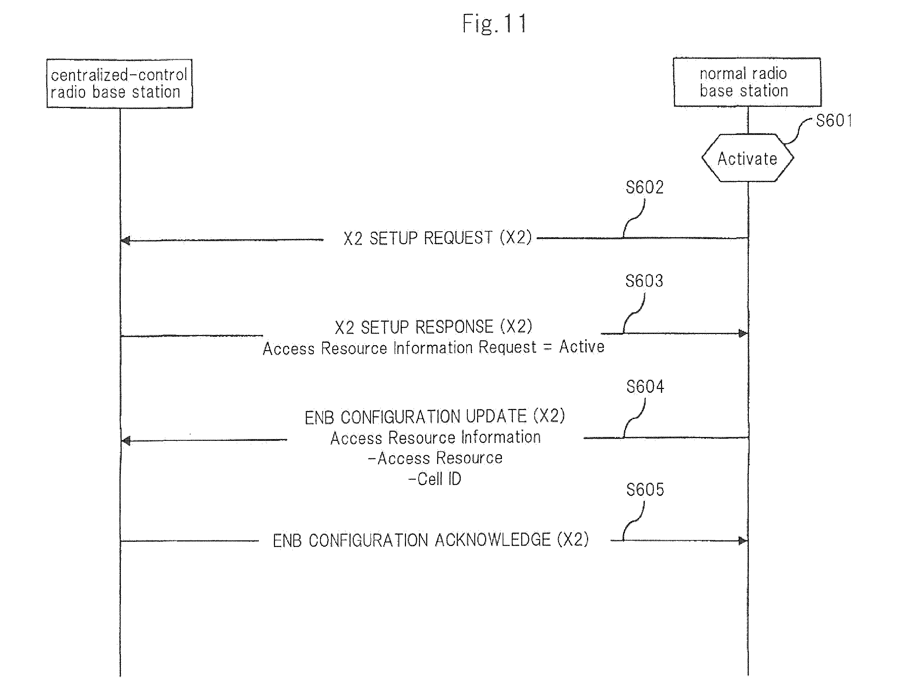

FIG. 11 is a sequence diagram showing other operations of assigning subframes at the time of activating normal radio base station 10.

At the time of activating (Step S601), control unit 101 of normal radio base station 10 transmits an X2 SETUP REQUEST message to centralized-control radio base station 30 (Step S602), and control unit 301 of centralized-control radio base station 30, upon receiving this X2 SEPUP REQUEST message, transmits an X2 SETUP RESPONSE message to normal radio base station 10 (Step S603). An "Access Resource Information Request" IE is added as a new information element to this X2 SETUP RESPONSE message, and control unit 301 sets this IE to "Active" to request assignment of subframes.

Upon receiving the X2 SETUP RESPONSE message that was transmitted from centralized-control radio base station 30, control unit 101 of normal radio base station 10 refers to the "Access Resource Information Bequest" IE, and when this IE is "active," determines the subframes that are to be assigned to centralized-control radio base station 30 and transmits an ENB CONFIGURATION UPDATE message to centralized-control radio base station 30 (Step S604). An "Access Resource Information" IE is added as a new information element to this END CONFIGURATION UPDATE message, and control unit 101 sets the Cell ID and Subframe numbers of assigned subframes in this IE.

In addition, control unit 101 includes the Subframe numbers of subframes that were assigned in an RRC: System Information message and transmits the message.

Upon receiving the ENB CONFIGURATION UPDATE message that was transmitted from normal radio base station 10, control unit 301 ofcentralized-control radio base station 30 transmits an ENB CONFIGURATION ACKNOWLEDGE message to normal radio base station 10 (Step S605) and includes data in subframes assigned from normal radio base station 10 and transmits the subframes to machine terminals present in cover areas 60-62.

Thus, according to the present exemplary embodiment, normal radio base station. 10 transmits to centralized-control radio base station 30 time information that indicates the transmission timings of frames, and centralized-control radio base station 30 synchronizes the transmission timings with normal radio base station 10 based on this time information and transmits data in the subframes assigned from normal radio base station 10.

As a result, the transmission of data in identical time bands by normal radio base station 10 and centralized-control radio base station 30 can be eliminated, whereby the inability to transmit data due to interference can be prevented.

In addition, normal radio base station 10 further transmits to user terminals and machine terminals notification information that indicates subframes that are assigned to centralized-control radio base station 30.

As a result, the notification information directed to user terminals and the notification information directed to machine terminals can be unified and each of the terminals can smoothly connect to a radio base station.

### Second Exemplary Embodiment

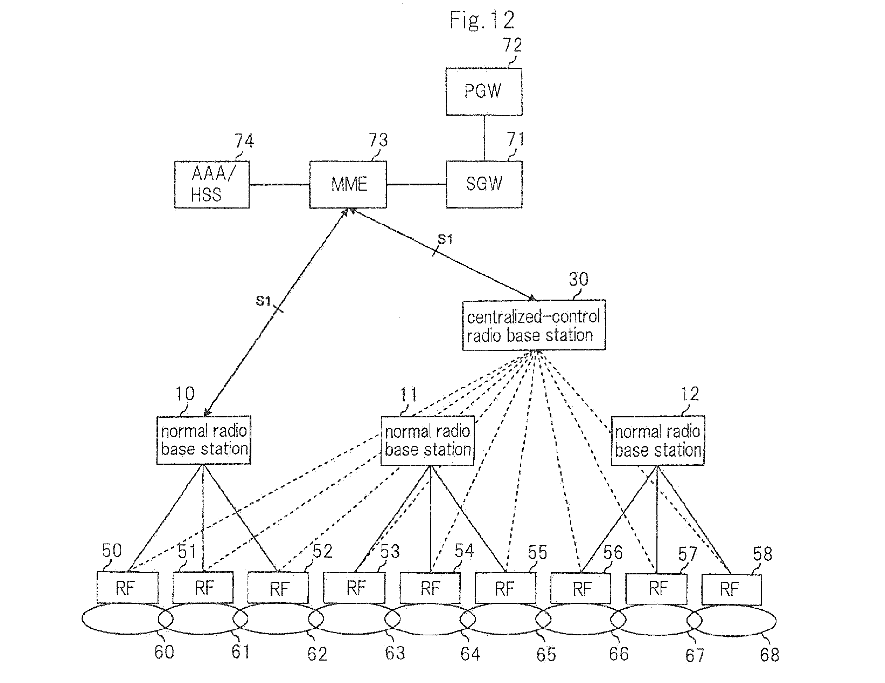

As shown in FIG. 12, the present exemplary embodiment differs from the first exemplary embodiment in that normal radio base station 10 and centralized-control radio base station 30 communicate information via MME 73 through an S1 interface.

The configurations of normal radio base stations 10-12, centralized -control radio base station 30, and RF transceivers 50-58 are the same as in the first exemplary embodiment, and detailed explanation is therefore here omitted.

The operations of the wireless communication system of the present exemplary embodiment are next described.

### (C) Transmission timing synchronization operations:

The operations for synchronizing the transmission timings between normal radio base station 10 and centralized-control radio base station 30 are first described.

### (C-1) Operations at the time of activating centralized-control radio base station 30:

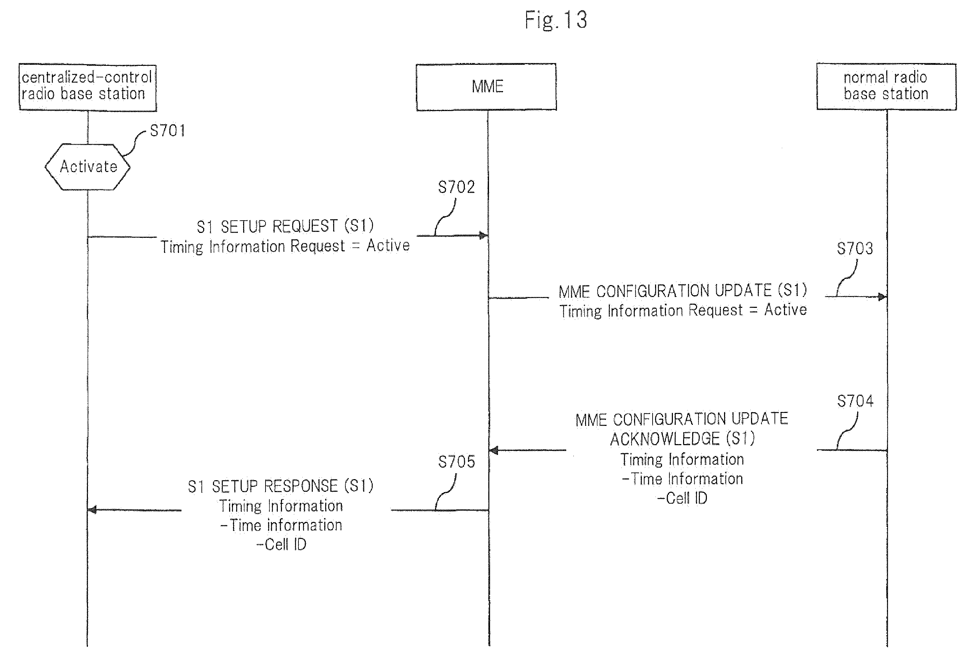

FIG. 13 is a sequence diagram showing the operations for synchronizing the transmission timings at the time of activating centralized-control radio base station 30.

At the time of activating (Step S701), control unit 301 of centralized-control radio base station 30 transmits an S1 SETUP REQUEST message to MME 73 (Step S702). A "Timing Information Request" IE is added as a new information element to this S1 SETUP REQUEST message, and control unit 301 sets the IE to "Active" to request time information.

Upon receiving the S1 SETUP REQUEST message that is transmitted from centralized-control radio base station 30, MME 73 refers to the "Timing Information Request" IE, and when this IE is "Active," transmits an MME CONFIGURATION UPDATE message to normal radio base stations 10-12 (Step S703). A "Timing Information Request" IE is added as a new information element to this MME CONFIGURATION UPDATE message, and MME 73 sets the IE to "active."

Upon receiving the MME CONFIGURATION UPDATE message that is transmitted from MME 73, time information acquisition unit 103 of normal radio base station 10 refers to the "Timing Information Request" IE, and acquires the time information if this IE is "active," and control unit 101 transmits an MME CONFIGURATION UPDATE ACKNOWLEDGE message to MME 73 (Step S704). A "Timing Information" IE is added as a new information, element to this MME CONFIGURATION UPDATE ACKNOWLEDGE message, and control unit 101 sets the Cell ID and time information that was acquired by time information acquisition unit 103 in this IE.

Upon receiving the MME CONFIGURATION ACKNOWLEDGE message that is transmitted from normal radio base station 10, MME 73 transmits an S1 SETUP RESPONSE message to centralized-control radio base station 30 (Step S705). A "Timing Information" TIE is added as a new information element to this S1 SETUP RESPONSE message, and MME 73 sets in this IE the Cell ID and time information that were set in the "Timing Information" IE of then MME CONFIGURATION ACKNOWLEDGE message.

Upon receiving the S1 SETUP RESPONSE message that is transmitted from MME 73, control unit 301 of centralized-control radio base station 30 synchronizes the transmission timings with each of the normal radio base stations based on the Cell ID and time information that were set in the "Timing Information" IE.

### (C-2) Operations at the time of activating normal radio base station 10:

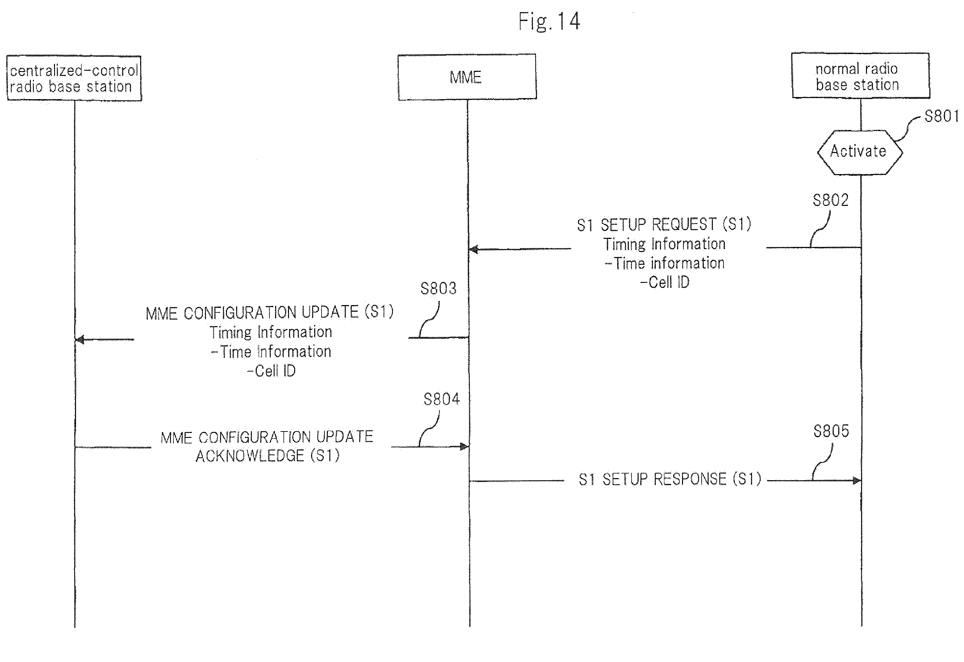

FIG. 14 is a sequence diagram showing the operations for synchronizing the transmission timings at the time of activating normal radio base station 10.

At the time of activating (Step S801), time information acquisition unit 103 of normal radio base station 10 acquires time information, and control unit 101 transmits an S1 SETUP REQUEST message to MME 73 (Step S802). A "Timing Information" IE is added as a new information element to this S1 SETUP REQUEST message, and control unit 101 sets the time information and Cell ID that were acquired by time information acquisition unit 103 in this IE.

Upon receiving the S1 SETUP REQUEST message that was transmitted from normal radio base station 10, MME 73 transmits a MME CONFIGURATION UPDATE message to centralized-control radio base station 30 (Step S803). A "Timing Information" IE is added as a new information element to this MME CONFIGURATION UPDATE message, and MME 73 sets in this IE the time information and Cell ID that were set in the "Timing Information" IE of the S1 SETUP REQUEST message.

Upon receiving the MME CONFIGURATION UPDATE message that is transmitted from MME 73, control unit 301 of centralized-control radio base station 30 synchronizes the transmission timing with normal radio base station 10 based on the time information that was set in the "Timing Information" IE. In addition, control unit 301 transmits to MME 73 a MME CONFIGURATION UPDATE ACKNOWLEDGE message (Step S804), and upon receiving this MME CONFIGURATION UPDATE ACKNOWLEDGE message, MME 73 transmits an S SETUP RESPONSE message to normal radio base station 10 (Step S805). (C-3) Other operations at the time of activating normal radio base station 10:

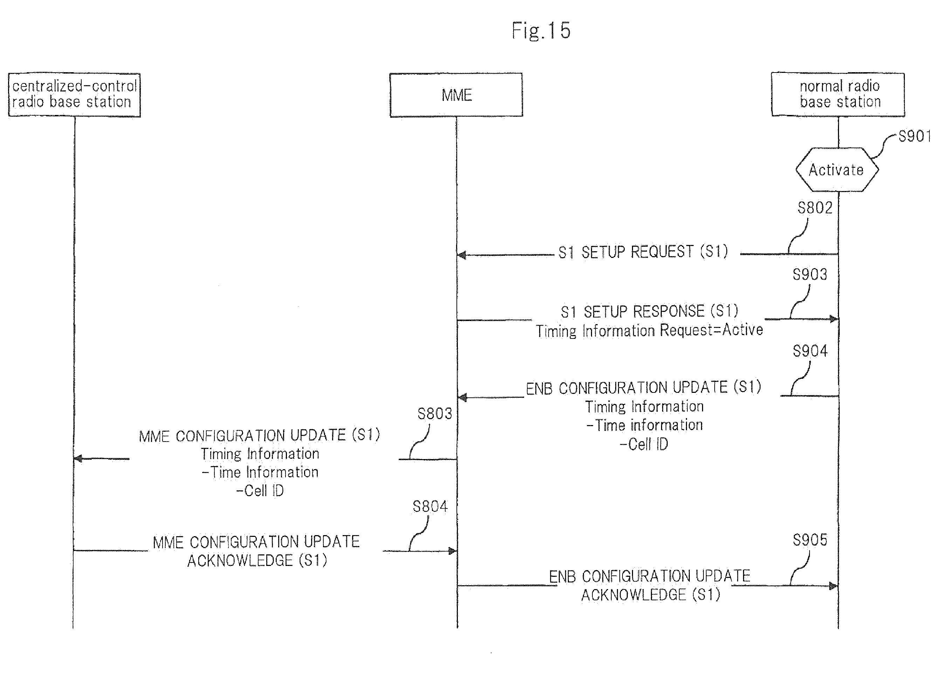

FIG. 15 is a sequence diagram showing other Operations for synchronizing the transmission timing at the time of activating normal radio base station 10.

At the time of activating (Step S901), control unit 10 of normal radio base station 10 transmits an S1 SETUP REQUEST message to MME 73 (Step S902), and upon receiving this S1 SETUP REQUEST message, MME 73 transmits an S1 SETUP RESPONSE message to normal radio base station 10 (Step S903). A "Timing Information Request" IE is added as a new information element to this S1 SETUP RESPONSE message, and MME 73 sets this IE to "Active" to request time information.

Upon receiving the S1 SETUP RESPONSE message that is transmitted from MME 73, time information acquisition unit 103 of normal radio base station 10 refers to the "Timing Information Request" IE and acquires time information if this IE is "Active," and control unit 101 transmits an ENB CONFIGURATION UPDATE message to MME 73 (Step S904). A "Timing Information" IE is added as a new information element to this ENB CONFIGURATION UPDATE message, and control unit 101 sets in this IE the Cell And time information acquired by time information acquisition unit 103.

Processes similar to Steps S803 and S804 are then carried out, and control unit 301 of centralized-control radio base station 30 synchronizes the transmission timing with normal radio base station 10.

Upon receiving the MME CONFIGURATION UPDATE ACKNOWLEDGE message that is transmitted from centralized-control radio base station 30, MME 73 transmits an ENB CONFIGURATION ACKNOWLEDGE message to normal radio base station 10 (Step S905).

### (D) Subframe assignment operations:

The operations for assigning subframes to centralized-control radio base station 30 are next described.

### (D-1) Operations at the time of activating of centralized-control radio base station 30:

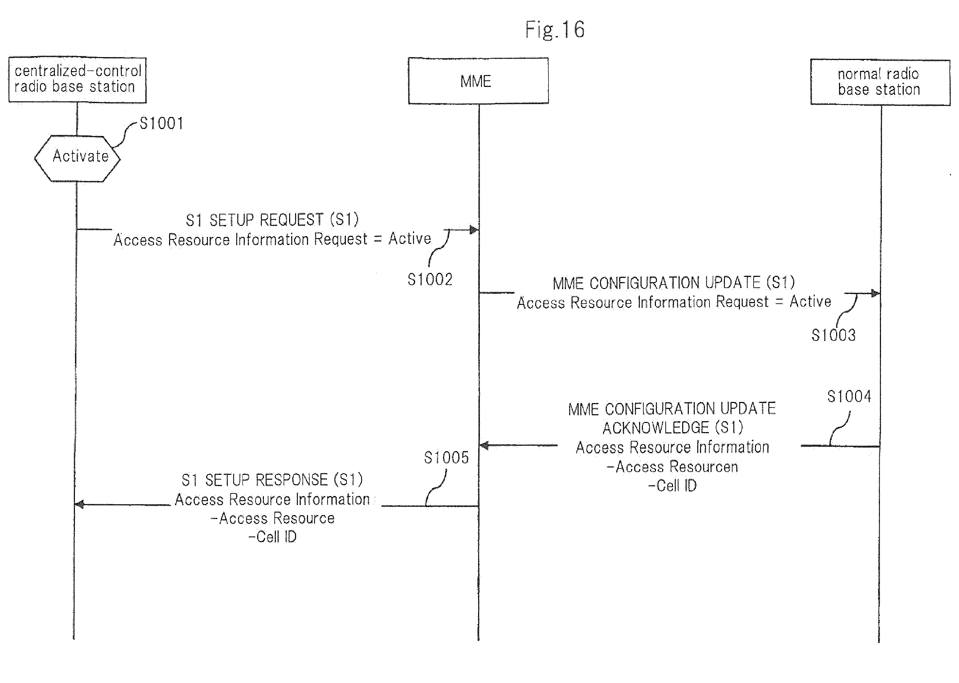

FIG. 16 is a sequence diagram showing the operations for assigning subframes at the time of activating of centralized-control radio base station 30.

At the time of activating (Step S1001), control unit 301 of centralized-control radio base station 30 transmits an S1 SETUP REQUEST message to MME 73 (Step S1002). An "access Resource Information Request" IE is added as a new information element to this S1 SETUP REQUEST message, and control unit 301 sets this IE to "Active" to request assignment of subframes.

Upon receiving the S1 SETUP REQUEST message that is transmitted from centralized-control radio base station 30, MME 73 refers to the "Access Resource Information Request" IE and if this IE is "active," transmits an MME CONFIGURATION UPDATE message to normal radio base stations 10-12 (Step S1003). An "Access Resource Information Request" IE is added as a new information element to this MME CONFIGURATION UPDATE message, and MME 73 sets this IE to "active."

Upon receiving the MME CONFIGURATION UPDATE message that is transmitted from MME 73, control unit 101 of normal radio base station 10 refers to the "Access Resource Information Request" IE, and if this IE is "Active," determines the subframes that are to be assigned to centralized-control radio base station 30 and transmits an MME CONFIGURATION UPDATE ACKNOWLEDGE message to MME 73 (Step S1004). An "Access Resource Information" IE is added as a new information element to this MME CONFIGURATION UPDATE ACKNOWLEDGE message, and control unit 101 sets in this IE the Cell ID and the Subframe numbers of the subframes that were assigned.

In addition, control unit 101 includes the Subframe numbers of the subframes that were assigned in an RRC: System Information message and transmits the message.

Upon receiving the MME CONFIGURATION UPDATE ACKNOWLEDGE message that is transmitted from normal radio base station 10, MME 73 transmits an S SETUP RESPONSE message to centralized-control radio base station 30 (Step S1005). An "Access Resource Information" IE is added as a new information element to this S1 SETUP RESPONSE message, and MME 73 sets in this IE the Cell ID and Subframe numbers that were set in the "Access Resource Information" IE of the MME CONFIGURATION ACKNOWLEDGE message.

When control unit 301 of centralized-control radio base station 30 receives the S1 SETUP RESPONSE message that was transmitted from MME 73 and the Cell ID that is set in the "Access Resource Information" IE indicates, for example, normal radio base station 10, control unit 30 includes data in the subframes that were assigned from normal radio base station 10 and transmits the subframes to machine terminals present in cover areas 60-62.

### (D-2) Operations at the time of activating normal radio base station 10:

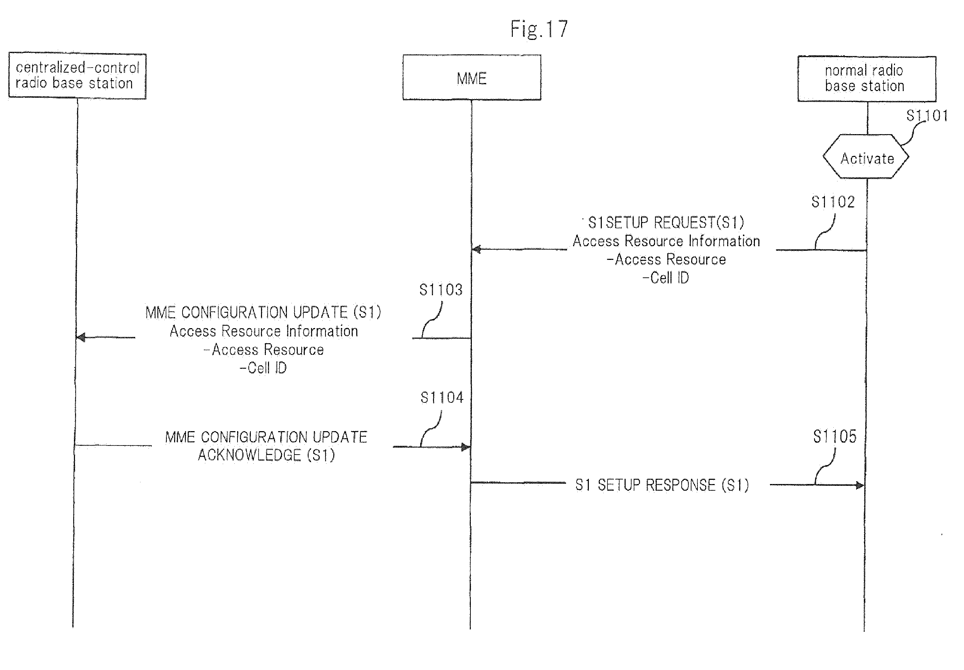

FIG. 17 is a sequence diagram showing the operations of assigning subframes at the time of activating normal radio base station 10.

At the time of activating (Step S1101), control unit 101 of normal radio base station 10 determines subframes that are to be assigned to centralized-control radio base station 30 and transmits an S1 SETUP REQUEST message to MME 73 (Step S1102). An "Access Resource Information" IE is added as a new information element to this S1 SETUP REQUEST message, and control unit 101 sets the Cell ID and Subframe numbers of the assigned subframes in this IE,

Control unit 101 of normal radio base station 10 further includes the Subframe numbers of the assigned subframes in an RRC: System Information message and transmits the message.

Upon receiving the S1 SETUP REQUEST message that is transmitted from normal radio base station 10, MME 73 transmits an MME CONFIGURATION UPDATE message to centralized-control radio base station 30 (Step S1103). An "Access Resource Information" IE is added as a new information element to this MME CONFIGURATION UPDATE message, and MME 73 sets the Subframe numbers and Cell ID that were set in the "Access Resource Information"" IE of the S1 SETUP REQUEST message in this IE.

Upon receiving the MME CONFIGURATION UPDATE message that is transmitted from MME 73, control unit 301 of centralized-control radio base station 30 transmits an MME CONFIGURATION UPDATE ACKNOWLEDGE message to MME 73 (Step S1104) and includes data in the subframes that were assigned from normal radio base station 10 and transmits the subframes to machine terminals that are present in cover areas 60-62.

Upon receiving the MME CONFIGURATION UPDATE ACKNOWLEDGE message that was transmitted from centralized-control radio base station 30, MME 73 transmits an S1 SETUP RESPONSE message to normal radio base station 10 (Step S1105).

### (D-3) Other operations at the time of activating of normal radio base station 10:

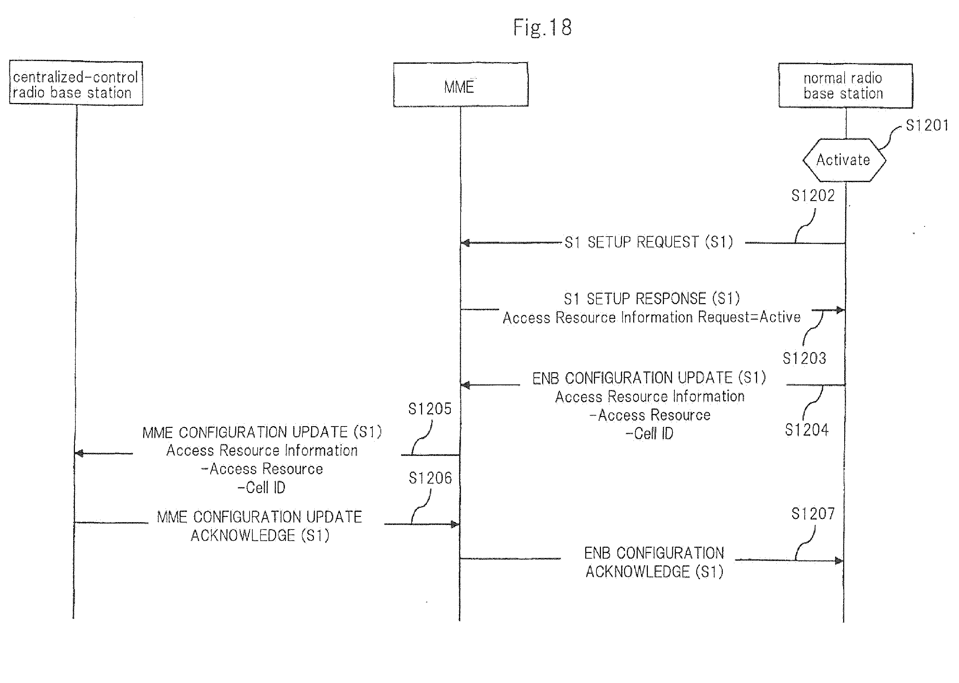

FIG. 18 is a sequence diagram showing other operations of assigning subframes at the time of activating normal radio base station 10.

At the time of activating (Step S1201), control unit 101 of normal radio base station 10 transmits an S1 SETUP REQUEST message to MME 73 (Step S1202), and upon receiving the S1 SETUP REQUEST message that is transmitted from normal radio base station, MME 73 transmits an S1 SETUP RESPONSE message to normal radio base station 10 (Step S1203). An "Access Resource Information Bequest" IE is added as a new information, element to this S1 SETUP REQUEST message, and MME 73 sets this IE to "Active" to request the assignment of subframes.

Upon receiving the S1 SETUP RESPONSE message that is transmitted from MME 73, control unit 101 of normal radio base station 10 refers to "Access Resource Information Request" IE, and if the IE is "Active," determines the subframes that are to be assigned to centralized-control radio base station 30 and transmits an ENB CONFIGURATION UPDATE message to MME 73 (Step S1204). An "Access Resource Information" IE is added as a new information element to this END CONFIGURATION UPDATE message, and control unit 101 sets the Subframe numbers of the assigned subframes and Cell ID in this IE.

Upon receiving the ENB CONFIGURATION UPDATE message that is transmitted from normal radio base station 10, MME 73 transmits an MME CONFIGURATION UPDATE message to centralized-control radio base station 30 (Step S1205). An "Access Resource Information" IE is added as a new information element to this MME CONFIGURATION UPDATE message, and MME 73 sets in this IE the Cell ID and Subframe numbers that were set in the "Access Resource Information" IE of the ENB CONFIGURATION UPDATE message.

Upon receiving the MME CONFIGURATION UPDATE message that is transmitted from MME 73, control unit 301 of centralized-control radio base station 30 transmits an MME CONFIGURATION UPDATE ACKNOWLEDGE message to MME 73 (Step S1206) and includes data in subframes that were assigned from normal radio base station 10 and transmits the subframes to machine terminals that are present in cover areas 60-62.

Upon receiving the MME CONFIGURATION UPDATE ACKNOWLEDGE message that is transmitted from centralized-control radio base station 30, MME 73 transmits an ENB CONFIGURATION ACKNOWLEDGE message to normal radio base station 10 (Step S1207).

Thus, according to the present exemplary embodiment, normal radio base station 10 and centralized-control radio base station 30 communicate information via MME 73 that is a higher-order device.

As a result, the transmission timing between normal radio base station 10 and centralized-control radio base station 30 can be synchronized and subframes can be assigned without communicating information through an X2 interface.

### Third Exemplary Embodiment

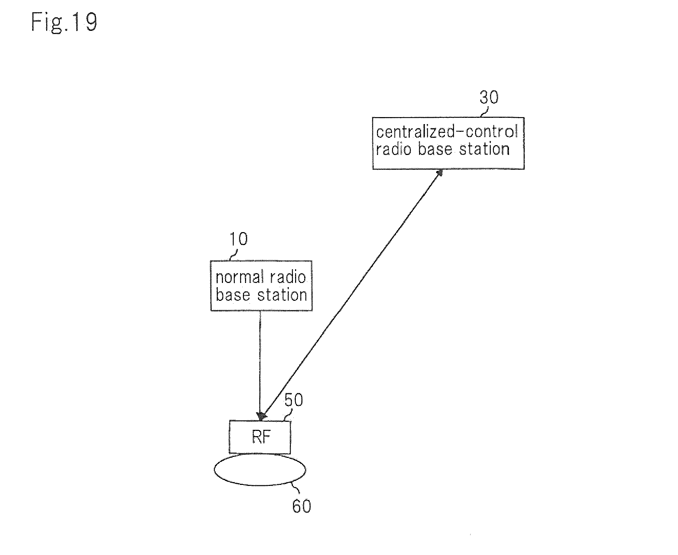

The present exemplary embodiment differs from the first and second exemplary embodiments in that normal radio base station 10 and centralized-control radio base station 30 communicate information via RF transceiver 50 that is connected in common, as shown in FIG. 19.

For the sake of simplification, normal radio base station 10 and centralized-control radio base station 30 are described as being connected to only one RF transceiver 50 in FIG. 19. In addition, the configurations of normal radio base station 10, centralized-control radio base station 30, and transceiver 50 are identical to those in the first and second exemplary embodiments and detailed explanation is therefore omitted.

The operations of the wireless communication system of the present exemplary embodiment are next described.

### (E) Operations of synchronizing transmission timing:

The operations for synchronizing the transmission timing between normal radio base station 10 and centralized-control radio base station 30 are next described.

### (E-1) Operations at the time of activating centralized-control radio base station 30:

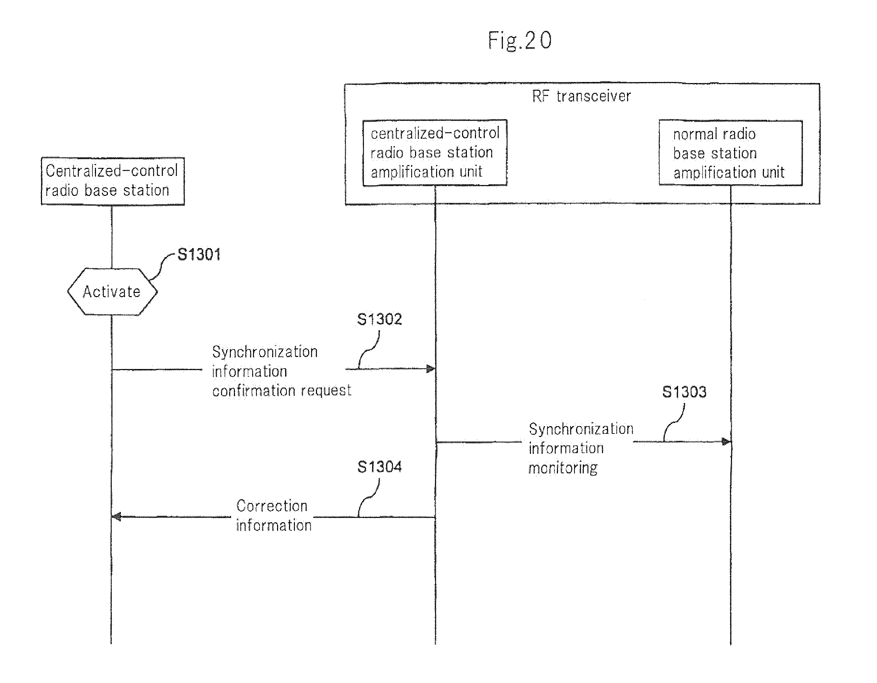

FIG. 20 is a sequence diagram showing the operations for synchronizing the transmission timing at the time of activating centralized-control radio base station 30.

Control unit 101 of normal radio base station 10 transmits synchronization information (time information) indicating the transmission timing to user terminals present in cover areas 60-62 via normal radio base station amplification unit 501 by a Synchronization Channel.

At the time of activating (Step S1301), control unit 301 of centralized-control radio base station 30 provisionally determines the transmission timing and communicates the provisionally determined transmission timing to centralized-control radio base station amplification unit 502 and transmits a synchronization information confirmation request requesting correction information indicating the amount of correction of the provisionally determined transmission timing (Step S1302).

When the synchronization information confirmation request is transmitted from centralized-control radio base station 30, centralized-control radio base station amplification unit 502 of RF transceiver 50 monitors the synchronization information that is transmitted via normal radio base station amplification unit 501 (Step S1303). Centralized-control radio base station amplification unit 502 further, based on the synchronization information that was monitored, calculates the correction amount of the transmission timing that was reported from centralized-control radio base station 30 such that the transmission timings are synchronized between normal radio base station 10 and centralized-control radio base station 30 and supplies correction amount information that indicates the calculated correction amount to centralized-control radio base station 30 (Step S1304).

Control unit 301 of centralized-control radio base station 30 corrects the transmission timing that was provisionally determined based on the correction information that was supplied from RF transceiver 50.

### (E-2) Operations at the time of activating normal radio base station 10:

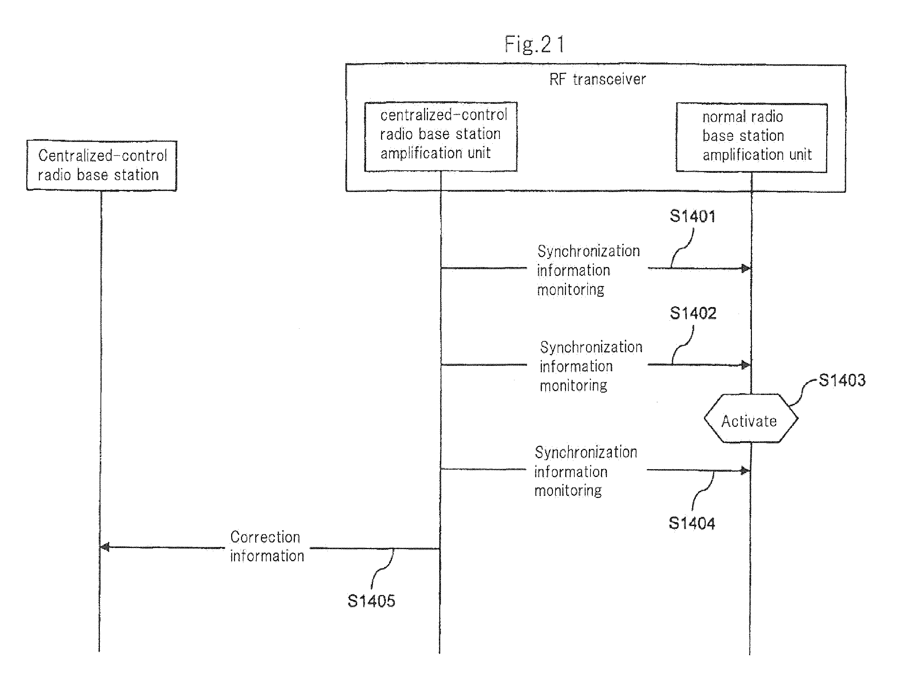

FIG. 21 is a sequence diagram showing the operations for synchronizing the transmission timing at the time of activating normal radio base station 10.

Centralized-control radio base station amplification unit 502 of RF transceiver 50 constantly monitors the synchronization information that is transmitted via normal radio base station amplification unit 501 (Steps S1401 and S1402). Normal radio base station 300 is not activated in Steps S1401 and S1402 and does not transmit synchronization information.

When normal radio base station 10 is activated (Step S1403) and begins transmission of synchronization information via normal radio base station amplification unit 501, centralized-control radio base station amplification unit 502 monitors the synchronization information (Step S1404), calculates the correction amount of the transmission timing that was communicated from centralized-control radio base station 30 based on the synchronization information that was monitored and supplies the correction information to centralized-control radio base station 30 (StepS 1405).

Control unit 301 of centralized-control radio base station 30 corrects the transmission timing that was provisionally determined based on the correction information that was supplied from RF transceiver 50.

Thus, according to the present exemplary embodiment, centralized-control radio base station 30 synchronizes the transmission timing with normal radio base station 10 based on the transmission timing of normal radio base station 10 that was communicated from RF transceiver 50.

As a result, the transmission timing between normal radio base station 10 and centralized-control radio base station 30 can be synchronized without reporting the information that is necessary for synchronizing transmission timing through an X2 interface or an S I interface.

Although an example was used in the present exemplary embodiment in which a correction amount is calculated for transmission timing that was provisionally determined by centralized-control radio base station 30, the present invention is not limited to this form, and the transmission timing of normal radio base station 10 that is indicated by synchronization information may be reported to centralized-control radio base station 30 and centralized -control radio base station 30 may then synchronize the transmission timing with normal radio base station 10 based on this report.

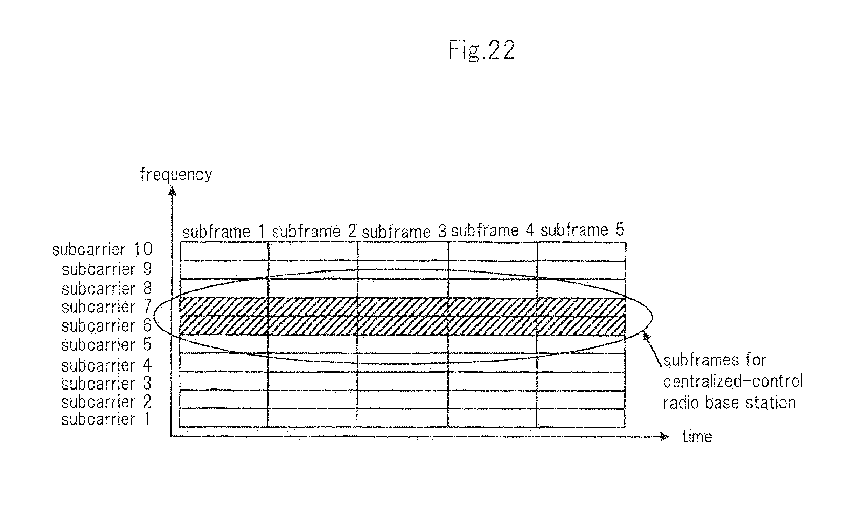

Further, although examples were described in the first and second exemplary embodiments in which specific subframes were assigned to centralized-control radio base station 30, the present invention is not limited to this form, and specific subcarriers can also be assigned as shown in FIG. 22.

In this case, normal radio base station 10 reports to centralized-control radio base station 30 subframes that were assigned and transmits data to user terminals by subcarriers other than the assigned subcarriers, and centralized-control radio base station 30 transmits data to machine terminals in subcarriers that are assigned from normal radio base station 10.

Although the invention of the present application has been described hereinabove with reference to exemplary embodiments, the present invention is not limited to the above-described exemplary embodiments. The configuration and details of the invention of the present application are open to various modifications within the scope of the invention of the present application that will be clear to one of ordinary skill in the art.

This application claims the benefits of priority based on Japanese Patent Application No. 2010-023120 for which application was submitted on February 4, 2010 and incorporates by citation all of the disclosures of that application.

## Claims

1. A wireless communication system comprising:
a plurality of first radio base stations that each includes data in frames and uses frequencies in a predetermined frequency band to transmit the frames to a first terminal that is present in the cover area of its own base station; and
a second radio base station that has as its cover area the same area as the cover areas of said plurality of first radio base stations and that includes data in frames and uses frequencies in said predetermined frequency band to transmit the frames to a second terminal that is present in the cover area of its own base station;
wherein each of said plurality of first radio base stations reports to said second radio base station the transmission timing at which said first radio base station transmits the frames to said first terminal; and
said second radio base station synchronizes the transmission timing of frames that are transmitted to said second terminal with the transmission timing that was reported from said first radio base station that covers the cover area in which said second terminal is present.

2. The wireless communication system according to claim 1, wherein each of said plurality of first radio base stations determines a time band in which said second radio base station includes data in frames and reports the determined time band to said second radio base station.

3. The wireless communication system according to claim 2, wherein:
each of said plurality of first radio base stations is connected to said second radio base station through an X2 interface; and
each of said plurality of first radio base stations reports the transmission timing at which said first radio base station transmits the frames and the determined time band to said second radio base station through said X2 interface.

4. The wireless communication system according to claim 2, further comprising:
a higher-order station that is connected to said plurality of first radio base stations and
said second radio base station through an S interface;
wherein each of said plurality of first radio base stations reports the transmission timing at which said first radio base station transmits the frames and the determined time band to said second radio base station through said S1 interface via said higher-order station.

5. The wireless communication system according to claim 2, further comprising:
a plurality of RF transceivers each provided for a respective first radio base station of said plurality of first radio base stations and that each transceivers amplifying data that are transmitted from a corresponding first radio base station and from said second radio base station;
wherein each of said plurality of first radio base stations reports the transmission timing at which said first radio base station transmits the frames and the determined time band to said second radio base station via said corresponding RF transceiver.

6. The wireless communication system according to any one of claims 2 to 5, wherein each of said plurality of first radio base stations reports said determined time band to said first and second terminals that are present in the cover area of that first radio base station.

7. The wireless communication system according to claim 1, wherein each of said plurality of first radio base stations determines a frequency in said predetermined frequency band that is to be used in transmission of frames by said second radio base station and reports the determined frequency to said second radio base station.

8. A radio base station that includes data in frames and uses frequencies in a predetermined frequency band to transmit the frames to a first terminal that is present in the cover area of said radio base station, comprising:
a control unit that reports the transmission timing at which said radio base station transmits the frames to said first terminals to a centralized-control radio base station that has as its cover area the same area as the cover area of said radio base station and that uses frequencies in said predetermined frequency band to transmit frames included in data to a second terminal that is present in the cover area of its own base station.

9. A cooperative control method by which a first radio base station cooperates with a second radio base station when said first radio base station and said second radio base station have the same area as cover area and use frequencies in the same frequency band to transmit frames included in data to a first terminals and a second terminal, respectively, said cooperative control method comprising steps of:
reporting the transmission timing at which said first radio base station transmits the frames to said first terminal from said first radio base station to said second radio base station.
